# EUROPEAN PATENT SPECIFICATION

(11) **EP 3 749 734 B1**
(45) Date of publication and mention of the grant of the patent: **22.12.2021**
(21) Application number: 19708358.7
(22) Date of filing: 06.02.2019
(51) Int. Cl.: C10B 3/00, C10B 43/14, C10B 49/00, C10J 3/26, C10J 3/72, C10J 3/42

(54) **GASIFICATION PLANT**
VERGASUNGSANLAGE
INSTALLATION DE GAZÉIFICATION

(30) Priority: 08.02.2018 IT 201800002481; 08.02.2018 IT 201800002482; 08.02.2018 IT 201800002483
(43) Date of publication of application: 16.12.2020
(73) Proprietor: Societa' per Azioni Curti - Costruzioni Meccaniche, 48014 Castel Bolognese (RA) (IT)
(72) Inventor: TOSI, Cristian, 41016 Castelfranco Emilia (Modena) (IT); CAVAZZONI, Massimo, 42019 Ventoso (Reggio Emilia) (IT)
(74) Representative: Crugnola, Pietro
(86) International application number: PCT/IB2019/050943
(87) International publication number: WO 2019/155373

(56) References cited:
- WO-A2-03/040267
- US-A1- 2004 182 294
- US-A1- 2010 050 515
- US-A1- 2011 120 853
- US-A1- 2016 017 244
- US-B1- 8 721 748

## Description

The present invention relates to a gasification plant, i.e. a plant for producing combustible gas by pyrolysis and combustion of biomass, such as, for example, wood chips, that is wood reduced into chips, vegetable biomass, or general solid-state biomass, with a humidity rate preferably not higher than 20%.

They are known from the state of the art gasification plants, such as exemplified in documents US 2004/182294 A1 and US 2010/050515 A1, comprising a reactor in which the biomass gasification occurs and which is typically divided into three zones:
- a first pyrolysis zone, in which the biomass introduced in the gasification apparatus is submitted to pyrolysis, that is a thermal decomposition which occurs exposing biomass at high temperatures, that is temperatures of a few hundred degrees Celsius, totally, or almost totally, oxygen-free.
- a second combustion zone in which the biomass is subjected to a combustion process under oxygen shortage conditions, that is, with an amount of oxygen lower than the stoichiometric amount required for a complete combustion of material, equal, for example to 40% of the stoichiometric amount of oxygen;
- a third reduction zone in which the combustible gas is produced, commonly referred to as syngas or synthetic gas, which contains carbon oxide, hydrogen, methane and carbon dioxide, with heating power comprised between 4 and 6 MJ/Nm³.

The gasification plants known from the state of the art, have the drawback that in the synthesis gas produced there is a high quantity of tars with high-molecular-weight, which must be removed, or converted into low-molecular-weight tars, to be able to use synthesis gas for supplying, for example, internal combustion engines.

This requires submitting the synthesis gas produced to a cracking process, for removing high-molecular-weight tars from gas.

This results in an increase in plant complexity and construction costs.

Another drawback of the known gasification plants relates to unloading solid residues of the biomass combustion, residues substantially composed of carbon powder having very small granulometry which causes easy obstructions in the unloading devices, with the need to interrupt the plant functioning to remove the aforesaid obstructions.

A further drawback is related to air infiltrations from the outside into the reactor which can cause alterations in the combustion conditions, with consequent alterations in the composition of the synthesis gas produced, with the risk that combustion can possibly extend to the pyrolysis zone, compromising the whole process of synthesis gas production.

Another further drawback, regarding pressure reactors, is the risk of leakage of pyrolysis or synthesis gases to the outside.

The present invention is directed to provide a gasification plant in which a remedy for the above indicated drawbacks is found.

According to the present invention it is provided a gasification plant for producing synthesis gas according to claim 1.

Thanks to the invention it is provided a gasification plant in which it is possible to obtain a synthesis gas with a very low percentage of high-molecular-weight tars, in which it is possible to unload efficiently the solid residues of the biomass combustion, with no risk of obstructions that block the unloading of said solid residues and in which air delivery from the outside into the reactor is prevented in such an amount as to alter the combustion conditions and propagate combustion to the pyrolysis zone.

The invention will be better understood and implemented with reference to the following description and to the enclosed drawings, showing a non-limiting embodiment of a gasification plant according to the invention, wherein:
Figure 1 is a schematic view of a gasification plant according to the invention;

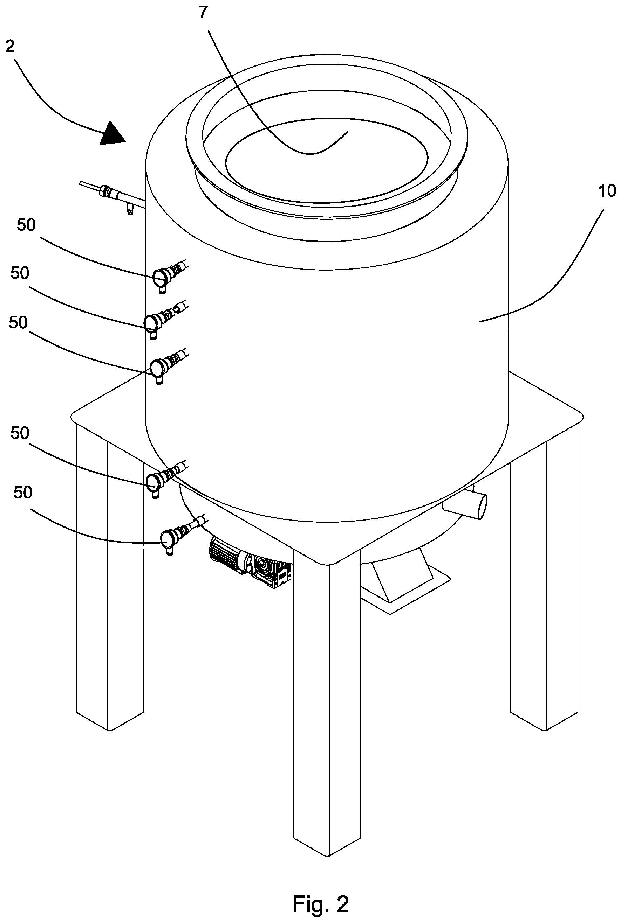

Figure 2 is a perspective view of the reactor of a gasification plant according to the invention, in which the biomass pyrolysis, the combustion of the pyrolysis products and the reduction of gases produced during combustion are carried out, in order to obtain the synthesis gas;

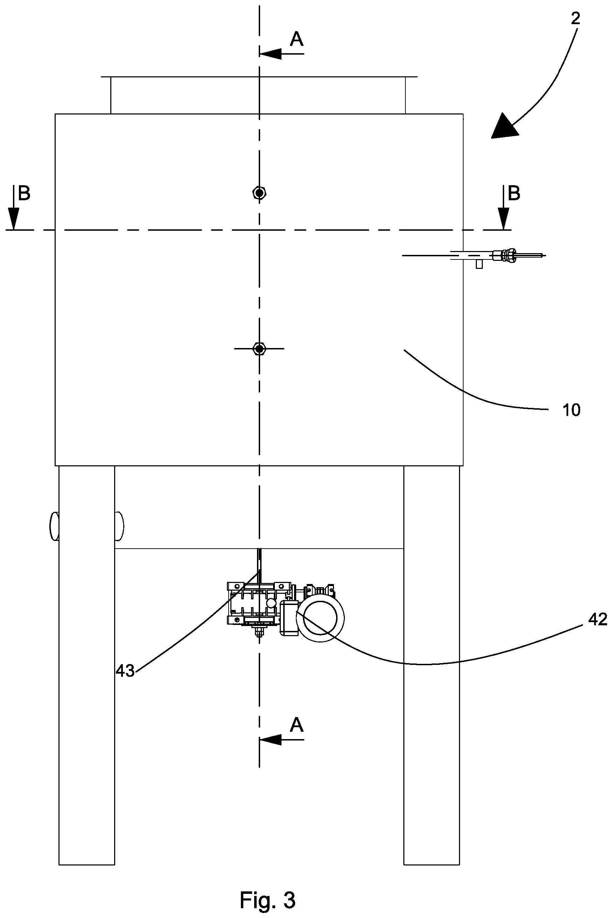

Figure 3 is an elevation view of the reactor illustrated in Figure 2;
Figure 4 is a section of Figure 3, along the line A-A in Figure 3;

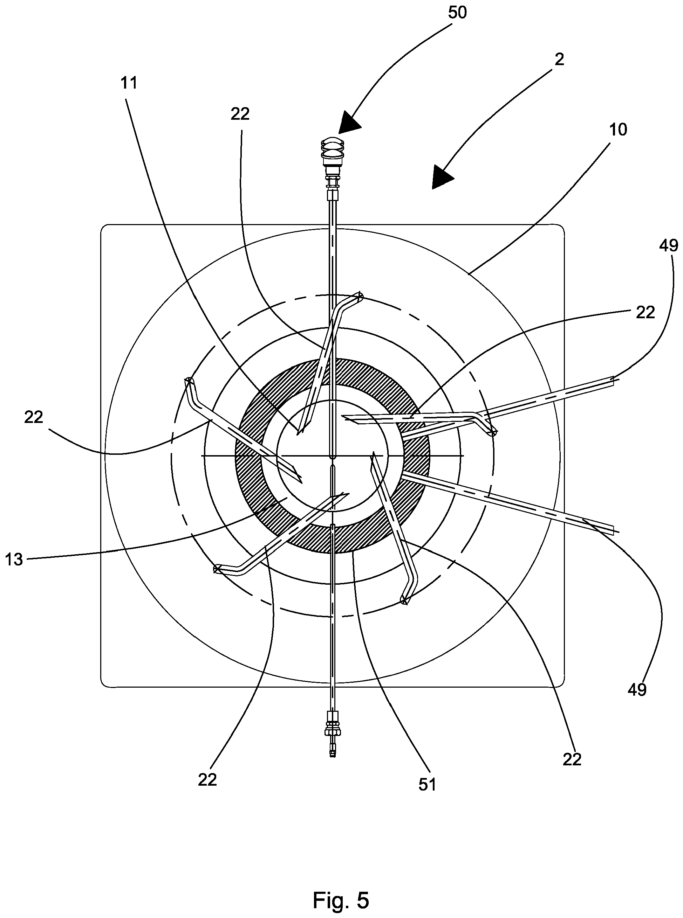

Figure 5 is a section of Figure 3, along the line B-B in Figure 3;

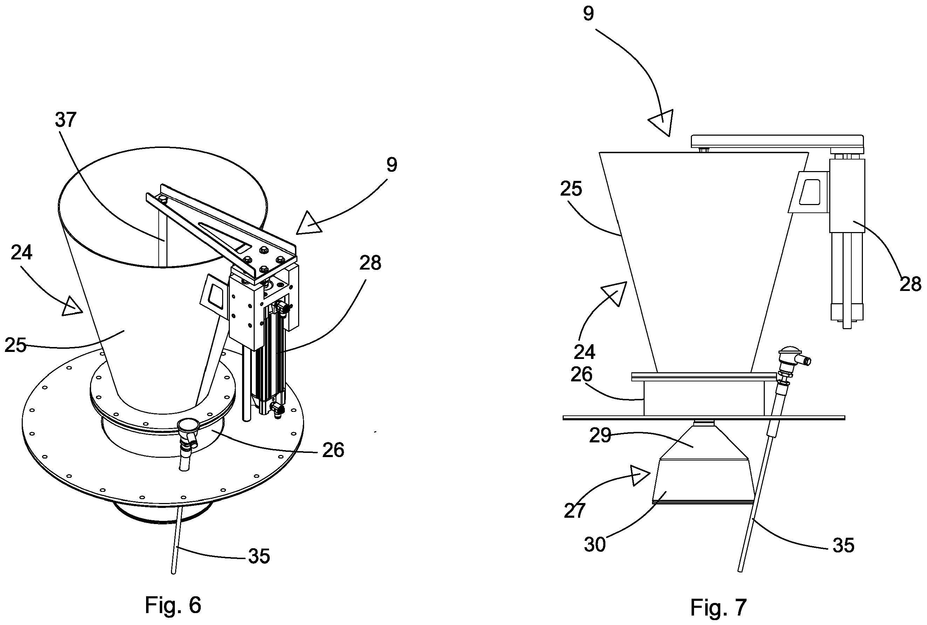

Figure 6 is a perspective view of a detail of the gasification plant according to the invention;
Figure 7 in an elevation view of the detail of Figure 6 in a first operative position,

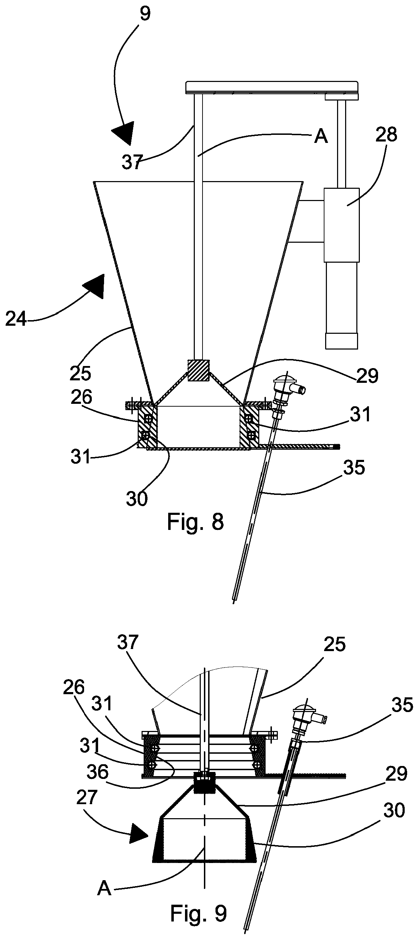

Figure 8 is a section view of the detail of Figures 6 and 7, in a second operative position;
Figure 9 is a section view of a detail of Figure 7.

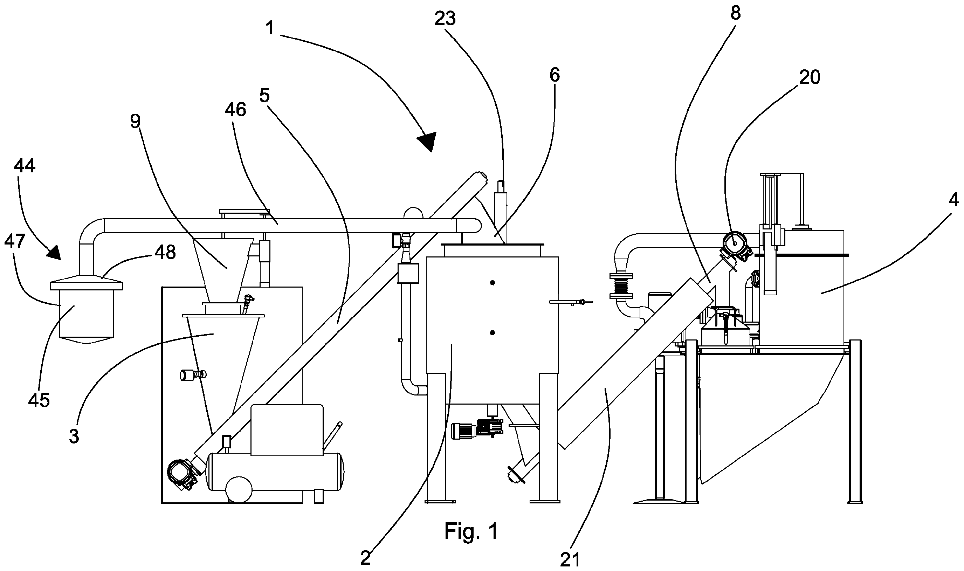

Referring to Figure 1, a gasification plant according to the invention comprises a reactor 2 in which the pyrolysis of the biomass to be gasified, the combustion of pyrolysis products and the reduction of the combustion products occur, for producing a combustible gas, commonly denominated as synthesis gas, or syngas.

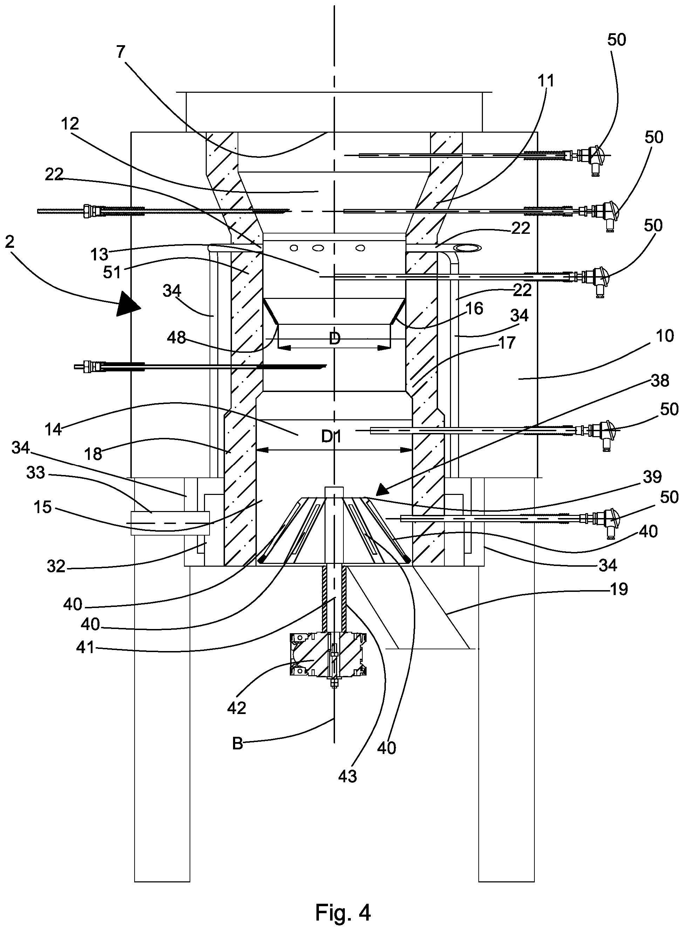

The reactor 2 comprises a shell 10, within which a reactor body 11 is housed (Figure 4), into which the biomass to be treated is delivered and inside which the chemical-physical processes conducting to the synthesis production occur.

The gasification plant 1 further comprises a supply tank 3, which contains the biomass with which the reactor 2 is supplied and a filter 4 in which filtering of synthesis gas produced occurs.

The biomass contained in the supply tank 3 is transported to the reactor 2 by means of a first conveying device 5, for example a first cochlea conveying device, which introduces the biomass into the reactor body 11 by means of a hopper 6, connected to a supply opening 7 of reactor 2, placed in an upper zone of the reactor body 11.

The combustion solid residues and the synthesis gas produced in reactor 3 are transported from reactor 2 to the filter 4 by means of a second conveying device 8, for example a second cochlea conveying device actuated by a motor 20, or by pneumatic transport.

The reactor body 11 substantially comprises four zones: a first pyrolysis zone 12, placed in the upper part of the reactor body 11, into which biomass to be treated is delivered and in which biomass undergoes a pyrolysis treatment. In this first zone 12, a level sensor 23 is provided, which can consist of, for example, a touching device, to verify whether the level of the biomass introduced in said first zone 12 reaches and exceeds a pre-established maximum value and thus to reduce the biomass supply.

A second combustion zone 13, placed in an intermediate part of the reactor body 11, in which combustion of products of the pyrolysis treatment is carried out.

A third reduction zone 14, placed in a lower part of the reactor body 11, where a reduction reaction of the gases produced by the combustion and the so called "cracking" of tars produced during the biomass combustion, that is the conversion of heavy hydrocarbons into light hydrocarbons, occur.

A fourth unloading zone 15 where solid products of the combustion of biomass, consisting substantially in powder and carbon granules, and the synthesis gas produced are unloaded from reactor 2.

The second combustion zone 13 can end up with a truncated cone element 16, that narrows downwards to an outlet port 48 having a first diameter D, and facilitating the transit of the combustion solid residual material from the second zone 13 to the third zone 14.

In the second zone 13 an air flow is delivered for implementing the combustion of material coming from the biomass which has already undergone the pyrolysis treatment in the first zone 12 of the reactor body 11. The amount of air delivery is lower than the stoichiometric amount required for a complete combustion of products of the pyrolysis treatment, such as to carry out an incomplete combustion under oxygen shortage conditions. The amount of air delivered can be equal, for example, to 40% of the stoichiometric amount required for a complete combustion.

In the second zone 13 at least one ignition device 49 is arranged, for example consisting in an electric cartridge resistance, useful for triggering combustion of the biomass when the reactor 2 is started. In the illustrated embodiment, two ignition devices 49 are provided. However, any number of ignition devices 49 can be provided, without departing from the scope of the present invention.

Air is delivered into the second zone 13 through a plurality of air injectors 22, which lead to said second zone 13 and which are supplied by means of a fan (not visible in the drawings). Injectors 22 are distributed at a substantially constant angular pitch along the periphery of the second zone 13 and are tilted in relation to a direction perpendicular to the outer surface 51 of the second zone 13, with a tilt angle comprised, for example, between 10° and 20°, so that to create a vortex motion of the air in said zone 13 to promote an improved mixing of air with the material to be submitted to combustion, in order to obtain a greater combustion uniformity.

The third reduction zone 14 has a first truncated cone portion 17, enlarging downwards until a second diameter D1, followed by a cylindrical portion 18 with diameter D1.

The Applicant has experimentally determined that suitably selecting the ratio between diameters D and D1 and between volume V of the second combustion zone 13 and volume VI of the third reduction zone 14 it is possible to greatly reduce the percentage of tars in the gas produced, for example until few tens of part per million, which allows to obtain a gas which can be directly used without further treatment for supplying, for example, an internal combustion motor.

The Applicant has determined that the above indicated result can be advantageously obtained with a ratio D1/D ≥ 2.5 and with a ratio V1/V ≥ 3.5.

In order to avoid an undesired delivery of air from the outside which might compromise the pyrolysis process in the first zone 12 of the reactor body 11, alter the combustion process of the second zone 13 of the reactor body 11 and the reduction process in the third zone 14 of the reactor body 11, the reactor body 11 is made of a very low porosity refractory material, which dramatically limits air infiltrations, and therefore, oxygen from the outside and emission of vapours, gases and fumes from the reactor body 11.

By very low porosity refractory material it is meant a refractory material which has a closed porosity percentage not lower than 85% and pores with average diameter not higher than 60 microns.

Such a type of material can be, for example, the silicon carbide-based material sold with the trade name "Iker" from Italker S.r.l. company, which comprises among its constituents 60-80% of silicon carbide, 10-30% of silica and 10-20% of alumina.

The reactor body 11 is externally coated, at the first zone 12, second zone 13 and third zone 14 with a thermally insulating material in order to minimize heat dispersion from the reactor body 11 towards the outside, thereby improving the performances of the gasification apparatus according to the invention. The external surface of the fourth unloading zone 15 of the reactor body 11 is not coated on the contrary with said thermally insulating material.

Around the fourth unloading zone 15 of the reactor body 11 a heat exchange device 32 is arranged, in which the air supplying injectors 22 is preheated. The heat exchange device 32 is provided with a delivery conduit 33, through which air to be preheated can be delivered into the further heat exchange device 32.

The heat exchange device 32 is connected to injectors 22 by means of respective connecting conduits 34.

In order to pre-heat air heat coming from the fourth unloading zone 15 of the reactor body 11 is used, which is transmitted to the heat exchange device 32 as the external surface of said fourth unloading zone 15, as previously specified, is not provided with an insulating material external coating.

Air can be delivered into the heat exchange device 32 by means of a fan device (not illustrated), or creating a depression inside the reactor body 11, suctioning air through the discharge conduit 19. The depression created within the reactor body 11 is transmitted to the heat exchange device 32 through connecting conduits 34, thus determining air suction from the outside via the delivery conduit 33.

In the fourth unloading zone 15 an unloading device 38 is arranged of solid residue materials of the combustion of biomass and synthesis gas produced in reactor 2.

The unloading device 38 is composed of an internally hollow body 39, the inside of which communicates with the discharge conduit 19. The body 39 has a truncated cone or truncated pyramid shape on a side surface of which slits 40 are made through which solid residues and synthesis gas are sent into the discharge conduit 19.

The body 39 can be advantageously made of the same material as the reactor body 11 is made, or of a metal material.

If the body 39 has a truncated cone shape, slits 40 are made along generating lines of the truncated cone and are distributed with a constant angular pitch. If, otherwise, the body 39 has a truncated pyramid shape, slits 40 are made along corners of body 39.

The body 39 is fixed to a shaft 41 that can be driven to rotate, by means of a motor 42, about a longitudinal axis B of the reactor body 11. The shaft 41 is mounted in a support 43 with an airtight coupling, to avoid an undesired delivery, not controllable, of air in the reactor body 11.

The peculiar structure of the unloading device 38 resulted to be particularly suitable for carrying out the unloading of the solid products of the biomass combustion with no risk of obstructions that may block the unloading of said solid products.

The combustion solid residues and the synthesis gas produced in reactor 3 are unloaded from the fourth zone 15 of reactor 2, by means of the unloading device 38, into a discharge conduit 19 communicating with the second conveying device 8, by means of which the combustion solid residues and the synthesis gas are conveyed from the reactor 2 to the filter 4.

Discharging into the discharge conduit 19 the synthesis gas produced in reactor 3 together with the combustion solid residues has the advantage that solid residues, while being conveyed by the conveyor 8 to the filter 4 stay in contact with the synthesis gas and depurate it from possible tar residues present therein, before being separated from the synthesis gas in filter 4. This precaution allows to minimize tar content in the synthesis gas, thus obtaining a synthesis gas with a remarkably high purity degree.

The second conveyor device 8 is inserted inside a further heat exchange device 21 through which the synthesis gas exiting from reactor 2 is cooled by an air flow generated in the further heat exchange device 21 by means of a fan (not visible in the drawings). This fan can also be used to generate a depression in the discharge conduit 19 of the reactor body 11, in order to deliver air into the heat exchange device 32.

Hot air exiting from the heat exchange device 21 can be used for different purposes, for example to reduce the percentage of biomass humidity, before it is reinserted into reactor 2.

The supply tank 3 is provided with a supply valve 9, which will be described below in more detail. The supply valve 9 is mounted in an airtight manner in a delivery opening of the supply tank 3 (not visible in the drawings). The supply tank 3 is made so that, when the supply valve 9 is in the closed position air cannot enter in an uncontrolled way inside the tank and, therefrom into the reactor body 11.

For the same reason, the first conveying device 5 is made airtight and it is airtightly coupled with the supply tank 3 and with the hopper 6. The latter is connected airtightly to the supply opening 7 of the reactor body 11.

Air-tightness is required to avoid significant amounts of air to penetrate in an uncontrolled manner from the outside inside the first zone 12 of the reactor body 11 causing a biomass combustion in said first zone 12 with the risk of bursts and flash-backs and fumes in the first conveying device 5 and in the supply tank 3.

It is true that, when the supply valve 9 opens to allow the delivery of biomass into the supply tank 3, a certain amount of air enters the supply tank 3 together with the biomass and can reach the first zone 12 of the reactor body 11, however they are small amounts of air, not sufficient to trigger a combustion of the biomass in said first zone 12.

The second conveying device 8 also is made airtight and is airtightly connected with the discharge conduit 19, to avoid an uncontrolled inlet of air that might trigger a combustion of the synthesis gas produced.

The supply valve 9 comprises a valve body 24 comprising a first truncated cone shaped portion 25 with the major base addressed upwards, serving as a hopper into which the biomass to be charged into the tank 3 is delivered by means of a conveying device, not visible in the drawings. The body 24 further comprises a second externally cylinder portion 26, which is connected airtightly with a supply opening (not visible in the drawings) of the supply tank 3 and it is provided with an inner pass-through hole 36 having truncated cone shape with the minor base addressed upwards.

The valve 9 further comprises a shutter device 27 which is actuated to move along a longitudinal axis A of the valve body 24 by means of a linear actuator 28.

The shutter device 27 comprises a first portion 29, connected with a manoeuvring arm 37, in turn connected with the linear actuator 28 which moves the manoeuvring arm 37 and, consequently the shutter device 27 along said longitudinal axis A.

The shutter device 27 further comprises a second portion 30 having such shape and dimensions as to be able to couple by shape-coupling with the surface of said inner hole 36, to take the supply valve 9 into the closed position.

The surface of the inner hole 36 is provided by at least a seal gasket 31, preferably a plurality of seal gaskets, to guarantee that the geometric coupling between the shutter 27 and the inner hole 36 is airtight.

The valve 9 is associated to a level sensor 35 which is used to detect the level of the biomass inside the tank 3, to adjust the biomass supply to the tank 3.

The reactor 2 is provided with a safety device 44 configured for absorbing and venting possible overpressures which might occur within the reactor 2.

The safety device 44 can be composed of a so-called hydraulic guard, comprising a tank 45, within which an inert liquid is contained, i.e. a liquid which cannot react with gas substances coming from the inside of the reactor, for example water. The tank 45 is connected with the reactor 2 via a tube 46 which, for example, can be connected with the hopper 6 through which the biomass is introduced in the reactor 2.

The tank 45 is provided with a lid 48 which is connected with the tank 45 so that it can move in a direction parallel to a side wall 47 of the tank 45, so that between the tank 45 and the lid 48 a port is created through which a possible overpressure occurring within the reactor 2 is vented. The tank 45 can be provided with a level sensor configured to indicate whether the level of the liquid in the tank 45 lowers below a predefined minimum level and whether some liquid must be delivered in the tank 45, to return the level of the liquid above said minimum level.

Instead of the hydraulic guard a rupture disk (not illustrated) can be provided, placed on a flange of the shell 10 of the reactor 2, which the hopper 6 is fixed to.

The reactor 2 is further provided with a plurality of temperature sensors 50, distributed over the first 12, second 13, third 14 and fourth 15 zone of the reactor body 11, through which it is possible to monitor the temperature in the aforesaid zones and to verify the correct functioning of the reactor 2.

Hereinafter the functioning of the gasification plant 1 according to the invention is disclosed.

Before starting the reactor 2 it is necessary to fill with carbon powder the second conveying device 8 and the reactor body 11 up until a level near to the outlet port 48 of the truncated cone element 16. The remaining volume of the reactor body 11, i.e. the pyrolysis zone 12 and the combustion zone 13 can be filled with the biomass to be treated.

Once the filling of the reactor body 11 is terminated, the at least one ignition device 49 is activated to start the combustion of the biomass in the second combustion zone 13 of the reactor body 11 and air is delivered into the second combustion zone 13 through injectors 22, in an amount lower than the stochiometric amount required for a complete combustion of the biomass, for example equal to about 40% of said stoichiometric quantity.

Heat produced by the biomass combustion in the second combustion zone 13 starts and supplies the pyrolysis treatment of the biomass in the first pyrolysis zone 12.

In full operation, the biomass introduced into the reactor 2 undergoes a first treatment of pyrolysis in the first pyrolysis zone 12, then it passes into the second combustion zone 13 in which it is subjected to incomplete combustion under oxygen-shortage conditions. Biomass combustion products, substantially consisting in carbon powder, synthesis gas and tars pass into the third reduction zone 14 where a reduction reaction of gases produced by combustion and the so called "cracking" of tars produced during biomass combustion, that is the conversion of heavy hydrocarbons into light hydrocarbons, occur.

Finally, biomass combustion products arrive in the fourth unloading zone 15, wherefrom they are discharged through the discharge conduit 19 through the unloading device 38.

Through the discharge conduit 19 the combustion products arrive to the second conveying device 8 which conveys them to the filter 4, in which the synthesis gas and the carbon powder are separated and sent to their respective stock tanks. Alternatively, the synthesis gas can be directly sent to the supply of an internal combustion motor.

Cooling of the conveying device 8 through the heat exchanger 21 allows to obtain condensation of possible tars contained in the synthesis gas, so that they are absorbed by the carbon powder, so as to obtain a synthesis gas substantially free from tars.

## Claims

1. Gasification plant (1) for producing combustible gas, or synthesis gases, by pyrolysis and combustion of biomass comprising a reactor (2) supplied with said biomass, said reactor (2) comprises a reactor body (11) that is supplied with said biomass through a supply opening (7), said reactor body (7) comprising a first pyrolysis zone (12) in which said biomass is subjected to pyrolysis treatment, a second combustion zone (13), in which the products of said pyrolysis treatment are subjected to combustion in oxygen shortage conditions, a third reduction zone (14) in which the combustion products are subjected to reduction so as to obtain said synthesis gas and a fourth unloading zone (15) from which solid combustion residues and synthesis gases are discharged from the reactor (2), **characterized in that** said fourth unloading zone (15) comprises an unloading device (38) for solid residual materials of the combustion of biomass and synthesis gas produced in the reactor (2), said unloading device (38) comprising an internally hollow body (39), the inside of which communicates with a discharge conduit (19) in which said synthesis gas and said residues of the combustion are discharged together, said body (39) being able to rotate around a longitudinal axis (B) of the reactor (2), said body (39) having a truncated cone shape or truncated pyramid shape on a side surface of which slits (40) are made.

2. Gasification plant according to claim 1, wherein, if said body (39) has a truncated cone shape, said slits (40) are arranged along generators of said side surface, distributed at a constant angular pitch, whereas if said body (39) has a truncated pyramid shape, said slits are arranged along corners of said side surface.

3. Gasification plant (1) according to claim 1, or 2, wherein said body (39) is fixed to a shaft (41) drivable to rotate, by a motor (42), around a longitudinal axis (B) of the reactor body (11), said shaft (41) being mounted in a support (43), with an airtight coupling.

4. Gasification plant (1) according to any of claims 1 to 3, wherein said reactor body (11) is made of a refractory material with very low porosity having a closed porosity percentage of not less than 85% and pores with an average diameter not higher than 60 microns.

5. Gasification plant (1) according to claim 4, wherein said very low porosity material is a material comprising silicon carbide, silica and alumina.

6. Gasification plant (1) according to any of claims 1 to 5, further comprising a supply tank (3) into which said biomass intended for supplying said reactor (2) is delivered, said supply tank being connected to a first conveying device (5) that removes said biomass from said supply tank (3) and conveys the biomass to said supply opening (7) by delivering said biomass to said supply opening (7) via a hopper (6) fixed to said supply opening (7), said first conveying device (5) being made airtight and being coupled in an airtight manner with the supply tank (3) and with the hopper (6), said hopper (6) being connected in an airtight manner to the supply opening (7) of the reactor body (11).

7. Gasification plant (1) according to any of claims 1 to 6, wherein said supply tank (3) is provided with a supply valve (9) mounted in an airtight manner in a delivery opening of the supply tank (3), said supply tank (3) being made in such a manner that, when the supply valve (9) is in closed position air cannot enter inside the supply tank (3).

8. Gasification plant (1) according to any of claims 1 to 7, further comprising a safety device (44) configured for venting overpressures that occur inside the reactor body (2), said safety device (44) comprising a tank (45), inside which an inert liquid is contained, said tank (45) being connected to the reactor body (11) by a pipe (46), said tank (45) being provided with a lid (46) that is connected to the tank (45) so as to be able to move in a direction parallel to a side wall (47) of the tank (45).

9. Gasification plant (1) according to any of claims 1 to 8, wherein said reactor body (11) is coated with a thermally insulating material at least at said first pyrolysis zone (12), at said second combustion zone (13) and at said third reduction zone (14).

10. Gasification plant (1) according to claim 9, wherein said reactor body is devoid of thermally insulating coating at said fourth unloading zone (15).

11. Gasification plant (1) according to claim 9, or 10, wherein around the fourth unloading zone (15) of the reactor body (11) a heat exchange device (32) is arranged, in which air is preheated that is intended to be delivered to said second combustion zone (13), by a plurality of air injectors (22) connected to said heat exchanger (32) via respective connecting conduits (34), said air being delivered to said heat exchanger (32) by a delivery conduit (33).

12. Gasification plant (1) according to claim 11, wherein said air injectors (22) are distributed at a substantially constant angular pitch along a periphery of the second combustion zone (13) and are tilted in relation to a direction that is perpendicular to an outer surface (51) of the second combustion zone (13) with a tilt angle comprised between 10° and 20°.

13. Gasification plant (1) according to any of claims 1 to 12, wherein said discharge conduit (19) is connected to a second conveying device (8), said second conveying device (8) being inserted inside a further heat exchange device (21).

14. Gasification plant according to claim 13, wherein said second conveying device (8) is made airtight.

15. Gasification plant (1) according to any of claims 1 to 14, further comprising at least one ignition device (49) configured for triggering combustion of said biomass in said second combustion zone (13).

## Patentansprüche

1. Vergasungsanlage (1) zur Herstellung von brennbarem Gas oder Synthesegasen durch Pyrolyse und Verbrennung von Biomasse, aufweisend einen Reaktor (2), dem die Biomasse zugeführt wird, wobei der Reaktor (2) einen Reaktorkörper (11) aufweist, dem die Biomasse durch eine Beladungsöffnung (7) zugeführt wird, wobei der Reaktorkörper (7) eine erste Pyrolysezone (12) aufweist, in der die Biomasse einer Pyrolysebehandlung unterzogen wird, eine zweite Verbrennungszone (13), in der die Produkte der Pyrolysebehandlung einer Verbrennung unter Sauerstoffmangelbedingungen unterzogen werden, eine dritte Reduktionszone (14), in der die Verbrennungsprodukte einer Reduktion unterzogen werden, um das Synthesegas zu erhalten, und eine vierte Entladezone (15), aus der die festen Verbrennungsrückstände und die Synthesegase aus dem Reaktor (2) entnommen werden, **dadurch gekennzeichnet, dass** die vierte Entladezone (15) eine Entladevorrichtung (38) für feste Rückstandsmaterialien aus der Verbrennung von Biomasse und für Synthesegas, die in dem Reaktor (2) hergestellt werden, aufweist, wobei die Entladevorrichtung (38) einen inneren hohlen Körper (39) aufweist, dessen Inneres mit einer Entnahmeleitung (19) in Verbindung steht, in der das Synthesegas und die Rückstände der Verbrennung zusammen entnommen werden, wobei der Körper (39) um eine Längsachse (B) des Reaktors (2) rotierbar ist, wobei der Körper (39) eine kegelstumpfförmige oder pyramidenstumpfförmige Form aufweist, an deren Seitenfläche Schlitze (40) ausgebildet sind.

2. Vergasungsanlage nach Anspruch 1, wobei, wenn der Körper (39) die kegelstumpfförmige Form aufweist, die Schlitze (40) entlang der Mantellinie der Seitenfläche angeordnet sind, die in einem konstanten Winkelabstand verteilt sind, wobei, wenn der Körper (39) eine pyramidenstumpfförmige Form aufweist, die Schlitze entlang der Ecken der Seitenfläche angeordnet sind.

3. Vergasungsanlage (1) nach Anspruch 1 oder 2, wobei der Körper (39) an einer Welle (41) befestigt ist, die von einem Motor (42) um eine Längsachse (B) des Reaktorkörpers (11) drehbar betrieben wird, wobei die Welle (41) mit einer luftdichten Verbindung in einer Aufnahme (43) angebracht ist.

4. Vergasungsanlage (1) nach einem der Ansprüche 1 bis 3, wobei der Reaktorkörper (11) aus einem feuerfesten Material mit sehr geringer Porosität hergestellt ist, das einen geschlossenen-Porosität-Prozentsatz von nicht weniger als 85 % und Poren mit einem durchschnittlichen Durchmesser von nicht mehr als 60 Mikrometer aufweist.

5. Vergasungsanlage (1) nach Anspruch 4, wobei das Material mit sehr geringer Porosität ein Material ist, das Siliciumcarbid, Siliciumdioxid und Aluminiumoxid aufweist.

6. Vergasungsanlage (1) nach einem der Ansprüche 1 bis 5, die ferner einen Zufuhrtank (3) aufweist, in den die zur Beladung des Reaktors (2) bestimmte Biomasse zugeführt wird, wobei der Zufuhrtank mit einer ersten Fördervorrichtung (5) verbunden ist, die die Biomasse aus dem Zufuhrtank (3) entnimmt und die Biomasse zu der Beladungsöffnung (7) fördert, indem sie die Biomasse über einen an der Beladungsöffnung (7) befestigten Trichter (6) zu der Beladungsöffnung (7) fördert, wobei die erste Fördervorrichtung (5) luftdicht ist und luftdicht mit dem Zufuhrtank (3) und dem Trichter (6) verbunden ist, wobei der Trichter (6) luftdicht mit der Beladungsöffnung (7) des Reaktorkörpers (11) verbunden ist.

7. Vergasungsanlage (1) nach einem der Ansprüche 1 bis 6, wobei der Zufuhrtank (3) mit einem Zufuhrventil (9) ausgebildet ist, das luftdicht in einer Zufuhröffnung des Zufuhrtanks (3) befestigt ist, wobei der Zufuhrtank (3) derart ausgestaltet ist, dass wenn das Zufuhrventils (9) in einer geschlossenen Stellung ist, keine Luft in den Zufuhrtank (3) eindringen kann.

8. Vergasungsanlage (1) nach einem der Ansprüche 1 bis 7, die ferner eine Sicherheitsvorrichtung (44) aufweist, die zum Entlüften von Überdrücken, die innerhalb des Reaktorkörpers (2) entstehen, ausgestaltet ist, wobei die Sicherheitsvorrichtung (44) einen Tank (45) aufweist, in dem eine inerte Flüssigkeit enthalten ist, wobei der Tank (45) mit dem Reaktorkörper (11) durch ein Rohr (46) verbunden ist, wobei der Tank (45) einen Deckel (46) aufweist, der mit dem Tank (45) derart verbunden ist, dass er sich in einer Richtung parallel zu einer Seitenwand (47) des Tanks (45) bewegen kann.

9. Vergasungsanlage (1) nach einem der Ansprüche 1 bis 8, wobei der Reaktorkörper (11) zumindest an der ersten Pyrolysezone (12), an der zweiten Verbrennungszone (13) und an der dritten Reduktionszone (14) mit einem wärmeisolierenden Material beschichtet ist.

10. Vergasungsanlage (1) nach Anspruch 9, wobei der Reaktorkörper an der vierten Entladezone (15) keine wärmeisolierende Beschichtung aufweist.

11. Vergasungsanlage (1) nach Anspruch 9 oder 10, wobei um die vierte Entladezone (15) des Reaktorkörpers (11) eine Wärmeaustauschvorrichtung (32) angeordnet ist, in der Luft vorgewärmt wird, die der zweiten Verbrennungszone (13) zugeführt werden kann, und zwar durch eine Vielzahl von Luftinjektoren (22), die mit dem Wärmeaustauscher (32) über entsprechende Verbindungsleitungen (34) verbunden sind, wobei die Luft dem Wärmeaustauscher (32) durch eine Zufuhrleitung (33) zugeführt wird.

12. Vergasungsanlage (1) nach Anspruch 11, wobei die Luftinjektoren (22) in einem im Wesentlichen konstanten Winkelabstand entlang eines Umfangs der zweiten Verbrennungszone (13) verteilt sind und in Bezug auf eine Richtung, die senkrecht zu einer Außenfläche (51) der zweiten Verbrennungszone (13) ist, mit einem Neigungswinkel zwischen 10° und 20° geneigt sind.

13. Vergasungsanlage (1) nach einem der Ansprüche 1 bis 12, wobei die Entnahmeleitung (19) mit einer zweiten Fördervorrichtung (8) verbunden ist, wobei die zweite Fördervorrichtung (8) in eine weitere Wärmeaustauschvorrichtung (21) eingebracht ist.

14. Vergasungsanlage nach Anspruch 13, wobei die zweite Fördereinrichtung (8) luftdicht ausgeführt ist.

15. Vergasungsanlage (1) nach einem der Ansprüche 1 bis 14, die ferner mindestens eine Zündvorrichtung (49) aufweist, die zum Auslösen der Verbrennung der Biomasse in der zweiten Verbrennungszone (13) ausgebildet ist.

## Revendications

1. Installation de gazéification (1) pour produire du gaz combustible ou des gaz de synthèse, par pyrolyse et combustion de biomasse comprenant un réacteur (2) alimenté avec ladite biomasse, ledit réacteur (2) comprend un corps de réacteur (11) qui est alimenté avec ladite biomasse à travers une ouverture d'alimentation (7), ledit corps de réacteur (11) comprenant une première zone de pyrolyse (12) dans laquelle ladite biomasse est soumise à un traitement de pyrolyse, une deuxième zone de combustion (13), dans laquelle les produits dudit traitement de pyrolyse sont soumis à une combustion dans des conditions de manque d'oxygène, une troisième zone de réduction (14) dans laquelle les produits de combustion sont soumis à une réduction de manière à obtenir ledit gaz de synthèse et une quatrième zone de déchargement (15) à partir de laquelle des résidus de combustion solides et des gaz de synthèse sont déchargés du réacteur (2), **caractérisée en ce que** ladite quatrième zone de déchargement (15) comprend un dispositif de déchargement (38) pour les matériaux résiduels solides de la combustion de biomasse et le gaz de synthèse produits dans le réacteur (2), ledit dispositif de déchargement (38) comprenant un corps creux à l'intérieur (39), dont l'intérieur communique avec un conduit de décharge (19) dans lequel ledit gaz de synthèse et lesdits résidus de la combustion sont déchargés ensemble, ledit corps (39) pouvant tourner autour d'un axe longitudinal (B) du réacteur (2), ledit corps (39) ayant une forme de cône tronqué ou une forme de pyramide tronquée sur une surface latérale de laquelle sont réalisées des fentes (40).

2. Installation de gazéification selon la revendication 1, dans laquelle, si ledit corps (39) a une forme de cône tronqué, lesdites fentes (40) sont arrangées le long de génératrices de ladite surface latérale, réparties à un pas angulaire constant, tandis que si ledit corps (39) a une forme de pyramide tronquée, lesdites fentes sont arrangées le long de coins de ladite surface latérale.

3. Installation de gazéification (1) selon la revendication 1, ou 2, dans laquelle ledit corps (39) est fixé à un arbre (41) apte à être commandé pour tourner, par un moteur (42), autour d'un axe longitudinal (B) du corps de réacteur (11), ledit arbre (41) étant monté dans un support (43), avec un couplage étanche à l'air.

4. Installation de gazéification (1) selon l'une quelconque des revendications 1 à 3, dans laquelle ledit corps de réacteur (11) est fait d'un matériau réfractaire avec une porosité très faible ayant un pourcentage de porosité fermée non inférieur à 85 % et des pores d'un diamètre moyen non supérieur à 60 microns.

5. Installation de gazéification (1) selon la revendication 4, dans laquelle le matériau à porosité très faible est un matériau comprenant du carbure de silicium, de la silice et de l'alumine.

6. Installation de gazéification (1) selon l'une quelconque des revendications 1 à 5, comprenant en outre un réservoir d'alimentation (3) dans lequel ladite biomasse destinée à alimenter ledit réacteur (2) est déversée, ledit réservoir d'alimentation (3) étant relié à un premier dispositif d'acheminement (5) qui déplace ladite biomasse depuis ledit réservoir d'alimentation (3) et achemine la biomasse jusqu'à ladite ouverture d'alimentation (7) en déversant ladite biomasse dans ladite ouverture d'alimentation (7) via une trémie (6) fixée à ladite ouverture d'alimentation (7), ledit dispositif d'acheminement (5) étant réalisé de manière étanche à l'air et étant couplé de manière étanche à l'air au réservoir d'alimentation (3) et à la trémie (6), ladite trémie (6) étant reliée de manière étanche à l'air à l'ouverture d'alimentation (7) du corps de réacteur (11).

7. Installation de gazéification (1) selon l'une quelconque des revendications 1 à 6, dans laquelle ledit réservoir d'alimentation (3) est pourvu d'une vanne d'alimentation (9) montée de manière étanche à l'air dans une ouverture de déversement du réservoir d'alimentation (3), ledit réservoir d'alimentation (3) étant fait de telle sorte que lorsque la vanne d'alimentation (9) est en position fermée, l'air ne puisse pas entrer à l'intérieur du réservoir d'alimentation (3).

8. Installation de gazéification (1) selon l'une quelconque des revendications 1 à 7, comprenant en outre un dispositif de sécurité (44) configuré pour évacuer des surpressions qui se produisent à l'intérieur du corps de réacteur (2), ledit dispositif de sécurité (44) comprenant un réservoir (45), à l'intérieur duquel est contenu un liquide inerte, ledit réservoir (45) étant relié au corps de réacteur (11) par un tuyau (46), ledit réservoir (45) étant pourvu d'un couvercle (46) qui est relié au réservoir (45) de manière à pouvoir se déplacer dans une direction parallèle à une paroi latérale (47) du réservoir (45).

9. Installation de gazéification (1) selon l'une quelconque des revendications 1 à 8, dans laquelle ledit corps de réacteur (11) est revêtu d'un matériau thermiquement isolant au moins sur la première zone de pyrolyse (12), sur la deuxième zone de combustion (13) et sur la troisième zone de réduction (14).

10. Installation de gazéification (1) selon la revendication 9, dans laquelle ledit corps de réacteur est dépourvu de revêtement thermiquement isolant sur ladite quatrième zone de déchargement (15).

11. Installation de gazéification (1) selon la revendication 9, ou 10, dans laquelle autour de la quatrième zone de déchargement (15) du corps de réacteur (11) est arrangé un dispositif échangeur de chaleur (32), dans lequel est préchauffé l'air qui est destiné à être amené dans ladite deuxième zone de combustion (13), par une pluralité d'injecteurs d'air (22) reliés audit échangeur de chaleur (32) via des conduits de liaison (34) respectifs, ledit air étant amené dans ledit échangeur de chaleur (32) par un conduit d'amenée (33).

12. Installation de gazéification (1) selon la revendication 11, dans laquelle lesdits injecteurs (22) sont répartis à un pas angulaire sensiblement constant le long d'une périphérie de la deuxième zone de combustion (13) et sont inclinés par rapport à une direction qui est perpendiculaire à une surface extérieure (51) de la deuxième zone de combustion (13) avec un angle d'inclinaison compris entre 10° et 20°.

13. Installation de gazéification (1) selon l'une quelconque des revendications 1 à 12, dans laquelle le conduit de décharge (19) est relié à un deuxième dispositif d'acheminement (8), ledit deuxième dispositif d'acheminement (8) étant inséré à l'intérieur d'un autre dispositif échangeur de chaleur (21).

14. Installation de gazéification (1) selon la revendication 13, dans laquelle ledit deuxième dispositif d'acheminement (8) est réalisé de manière étanche à l'air.

15. Installation de gazéification (1) selon l'une quelconque des revendications 1 à 14, comprenant en outre au moins un dispositif d'inflammation (49) pour déclencher la combustion de ladite biomasse dans ladite deuxième zone de combustion (13).
